# EUROPÄISCHE PATENTSCHRIFT

(11) **EP 3 668 727 B1**
(45) Veröffentlichungstag und Bekanntmachung des Hinweises auf die Patenterteilung: **16.06.2021**
(21) Anmeldenummer: 18755760.8
(22) Anmeldetag: 09.08.2018
(51) Int. Cl.: B60C 29/02

(54) **REIFENVENTIL**
TYRE VALVE
SOUPAPE POUR PNEU

(30) Priorität: 14.08.2017 DE 102017118520
(43) Veröffentlichungstag der Anmeldung: 24.06.2020
(73) Patentinhaber: Huf Baolong Electronics Bretten GmbH, 75015 Bretten (DE)
(72) Erfinder: ARNOLDO, Sven, 76316 Malsch (DE); SEIFERT, Andre, 75181 Pforzheim (DE); DEMENTYEV, Yevgen, 42287 Wuppertal (DE); DUSSINGER, Axel, 74906 Bad Rappenau (DE); TREIT, Alexander, 74858 Aglasterhausen (DE); GORENZWEIG, Igor, 42109 Wuppertal (DE); GAMER, Benedikt, 75045 Walzbachtal (DE)
(74) Vertreter: Twelmeier Mommer & Partner
(86) Internationale Anmeldenummer: PCT/EP2018/071624
(87) Internationale Veröffentlichungsnummer: WO 2019/034523

(56) Entgegenhaltungen:
- EP-A1- 1 831 036
- DE-U1-202006 005 269
- JP-A- 2014 008 935

## Beschreibung

Die Erfindung geht aus von einem Reifenventil mit den im Oberbegriff des Anspruchs 1 angegebenen Merkmalen, wie es aus der EP 1 831 036 B1 sowie JP 2014 008935 A bekannt ist.

Bei dem aus der EP 1 831 036 B1 bekannten Reifenventil weist der Ventilkörper eine Ringnut auf, in der ein Dichtring liegt, um einen Spalt zwischen dem Reifenventil und einer Felge abzudichten, an der das Reifenventil montiert ist. Die radial äußere Begrenzungswand stützt sich im montierten Zustand an der Felge ab und bildet so einen metallischen Anschlag. Das Reifenventil kann deshalb bei der Montage an einer Felge hohe Anzugmomente aufnehmen, ohne dass dies zu einer Beschädigung des Dichtrings führt. Das bekannte Reifenventil verbindet somit den Vorteil einer zuverlässigen Abdichtung eines Spalts zwischen dem Reifenventil und der Felge mit dem Vorteil einer einfachen Montage.

Aus DE 20 2006 005 269 U1 ist ein Reifenventil bekannt, dessen Ventilfuß einen Anschlagbund mit Aussparungen aufweist und an diesem Anschlagbund eine Dichtung trägt.

Aufgabe der vorliegenden Erfindung ist es einen Weg aufzuzeigen, wie diese Vorteile noch besser bzw. kostengünstiger erreicht werden können.

Diese Aufgabe wird durch ein Reifenventil mit den im Anspruch 1 angegebenen Merkmalen gelöst. Vorteilhafte Weiterbildungen der Erfindung sind Gegenstand von Unteransprüchen.

Bei einem erfindungsgemäßen Reifenventil hat die radial äußere Begrenzungswand der zur Aufnahme eines Dichtrings vorgesehenen Ringnut wenigstens eine Aussparung, vorzugsweise zwei oder mehr Aussparungen, zum Aufnehmen von Material des Dichtrings unter Druck. In die Aussparung(en) kann sich Material des Dichtrings hinein ausdehnen, wenn der Dichtring zwischen der Felge und dem Reifenventil verpresst wird. Die Größe der Ringnut muss wegen dieser Aussparung(en) nicht mehr so genau auf das Volumen des Dichtrings abgestimmt werden wie bei herkömmlichen Reifenventilen. Wenn das Volumen des Dichtrings größer ist als das für ihn in der Ringnut bzw. zwischen Reifenventil und Felge vorgesehene Volumen, kann überschüssiges Volumen des Dichtrings über die Aussparung(en) aufgenommen werden. Das überschüssige Volumen des Dichtrings kann beispielsweise auf Fertigungstoleranzen beruhen oder durch thermische Ausdehnung entstehen.

Eine vorteilhafte Weiterbildung der Erfindung sieht vor, dass sich die Aussparung(en) in der radial äußeren Begrenzungswand der Ringnut radial auswärts verengen. Die Fläche der Aussparung(en) ist also an der radial einwärts gelegenen Innenseite der Begrenzungswand größer als an der radial auswärts gelegenen Außenseite der Begrenzungswand. Auf diese Weise kann sich das Material des Dichtrings leichter in die Aussparung(en) hinein ausdehnen. Zudem lässt sich eine dabei auftretende mechanische Belastung des Dichtrings durch Kanten an den Rändern der Aussparung(en) reduzieren, da die Kanten bei einer sich radial auswärts verengenden Aussparung abgerundet sind oder einen stumpfen Winkel bilden.

Eine weitere vorteilhafte Weiterbildung der Erfindung sieht vor, dass die Aussparung(en) in axialer Richtung zu dem Lufteinlass hin offen sind. Derartige Aussparung(en) lassen sich mit recht geringem Aufwand herstellen. Beispielsweise indem Schlitze in die Begrenzungswand geschnitten werden.

Wie weit sich die Aussparung(en) in axialer Richtung erstrecken, lässt sich in weitern Grenzen frei wählen. Grundsätzlich kann sich Material eines in der Ringnut angeordneten Dichtrings umso besser in die Aussparung(en) hinein bewegen, je größer diese sind. Es ist deshalb vorteilhaft, wenn sich die Aussparung(en) in axialer Richtung wenigstens über die Hälfte der in axialer Richtung gemessenen Höhe der radial äußeren Begrenzungswand erstrecken. Beispielsweise können sich die Aussparung(en) in axialer Richtung über zwei Drittel oder mehr der in axialer Richtung gemessenen Höhe der radial äußeren Begrenzungswand erstrecken. Bevorzugt erstrecken sich die Aussparung(en) in axialer Richtung wenigstens über drei Viertel der in axialer Richtung gemessenen Höhe der radial äußeren Begrenzungswand. Die Aussparung(en) können sich über die gesamte Höhe der radial äußeren Begrenzungswand erstrecken, damit sich das Material des Dichtrings so leicht wie möglich in die Aussparung(en) hinein bewegen kann. Es kann aber auch vorteilhaft sein, wenn im Bereich der Aussparung(en) ein Rest der Begrenzungswand mit geringer Höhe vorhanden ist, beispielsweise um ein Einkleben des Dichtrings in die Ringnut zu erleichtern bzw. um zu verhindern, dass dazu verwendeter Klebstoff aus der Ringnut austritt.

Wie weit sich die Aussparung(en) in Umfangsrichtung erstrecken, kann ebenfalls in weiten Grenzen frei gewählt werden. Bevorzugt macht die in Umfangsrichtung an der Innenseite der Begrenzungswand gemessene Gesamtlänge der Aussparung(en) wenigsten ein Fünftel des Umfangs der Begrenzungswand aus, beispielsweise ein Viertel des Umfangs oder mehr. Wenn die Aussparung(en) einen zu großen Anteil an dem Umfang der Ringnut haben, kann darunter die Stabilität der Begrenzungswand leiden. Bevorzugt macht deshalb die in Umfangsrichtung an der Innenseite der Begrenzungswand gemessene Gesamtlänge der Aussparung(en) nicht mehr als die Hälfte des Umfangs der Begrenzungswand aus, beispielsweise ein Drittel oder weniger.

Die Anzahl der Aussparungen kann ebenfalls in weiten Grenzen frei gewählt werden. Bevorzugt sind wenigstens vier Aussparungen vorhanden, beispielsweise sechs Aussparungen oder mehr. Es kann aber auch eine wesentlich größere Anzahl von Aussparungen vorgesehen sein. Mehr als 12 Aussparungen bringen im Allgemeinen keine zusätzlichen Vorteile.

Weitere Einzelheiten und Vorteile der Erfindung werden an einem Ausführungsbeispiel unter Bezugnahme auf die beigefügten Zeichnungen erläutert. Es zeigen:

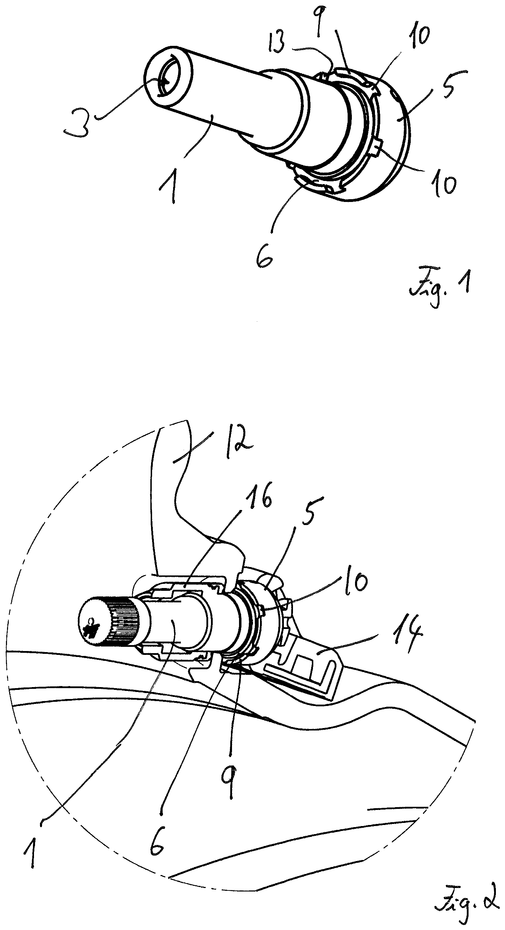

- Fig. 1: ein Reifenventil;
- Fig. 2: das in Fig.1 dargestellte Reifenventil mit einem Ausschnitt einer Felge;
- Fig. 3: eine Schnittansicht des Reifenventils mit Felge; und
- Fig. 4: eine Ansicht des Detail B von Fig. 3.

Das in den Figuren dargestellte Reifenventil hat einen Ventilschaft 1, in dem ein Luftkanal 2 von einem Lufteinlass 3 zu einem Luftauslass 4 führt. An dem Ventilschaft 1 ist ein Ventilkörper 5 angebracht, der im montierten Zustand des Reifenventils in einem Luftreifen (nicht gezeigt) angeordnet ist, also dem Luftauslass 4 benachbart ist. Der Ventilkörper 5 hat eine in Richtung des Lufteinlasses 3 offene Ringnut 6 zur Aufnahme eines polymeren Dichtrings 8, der beispielsweise eine Formdichtung sein kann.

Die Ringnut 6 umgibt den Luftkanal 2. Die Ringnut 6 ist dabei so orientiert, dass ihr Boden dem Luftauslass 4 und ihre Öffnung dem Lufteinlass 2 zugewandt ist. Die Ringnut 6 ist durch eine radial äußere Wand begrenzt, die im Folgenden als Begrenzungswand 9 bezeichnet wird. Die Begrenzungswand 9 weist radial durchgehende Aussparungen 10 auf, in die hinein sich Material des Dichtrings 8 ausdehnen kann, beispielsweise bei thermischer Ausdehnung oder unter Druckeinwirkung, wenn der Dichtring 8 zwischen dem Boden der Ringnut 6 und der Felge 12 verpresst wird.

Bei dem gezeigten Ausführungsbeispiel sind sechs Aussparungen 10 in der Begrenzungswand 9. Es können aber auch mehr oder weniger Aussparungen 10 vorgesehen sein, beispielsweise drei bis Zwanzig Aussparungen 10. In der Regel sind vier bis acht Aussparungen 10 besonders vorteilhaft. Die in Umfangsrichtung gemessene Gesamtlänge der Aussparungen 10 beträgt zwischen einen Fünftel und der Hälfte des maximalen Umfangs an der Innenseite der Begrenzungswand 9, beispielsweise zwischen einem Fünftel und einem Drittel.

Die Aussparungen 10 sind in axialer Richtung zu dem Lufteinlass 3 hin offen. In axialer Richtung können sich die Aussparungen 10 über die gesamte Höhe der Begrenzungswand 9 erstrecken, wie in den Figuren dargestellt, oder nur über einen Teil der Höhe.

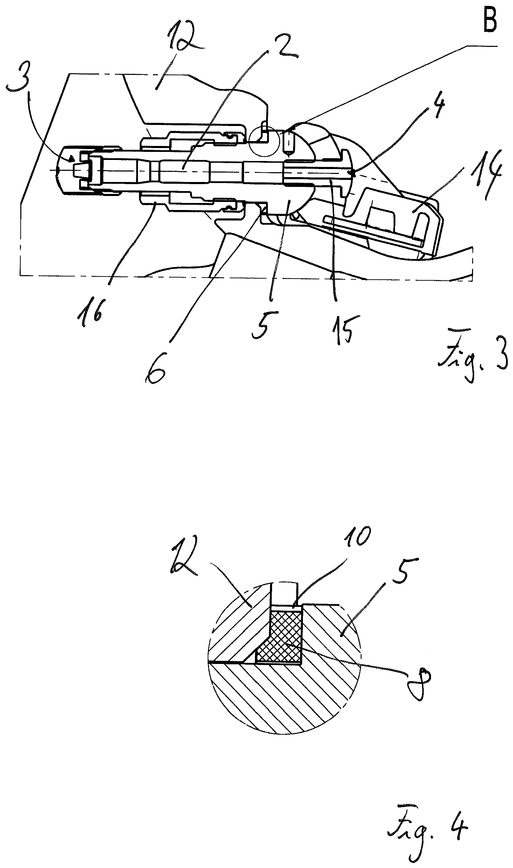

Im montierten Zustand drückt die Begrenzungswand 9 gegen die Felge 12, so dass der Dichtring 8 in der Ringnut 6 verpresst wird. Fig. 4 zeigt als Detailansicht den Ausschnitt B. Darin ist zu erkennen, dass in diesem Zustand Material des Dichtrings 8 in die Aussparung 10 der Begrenzungswand 9 hineingedrückt ist. Um dies zu erleichtern und die Gefahr einer Beschädigung des Dichtrings zu reduzieren, können die Aussparungen 10 sich radial auswärts verengen. Die Aussparungen 10 haben also auch der Innenseite der Begrenzungswand 9 eine größere Fläche, insbesondere eine größere Breite in Umfangsrichtung, also auf der Außenseite der Begrenzungswand 9. Beispielsweise können die Seitenflächen 13 der Aussparungen 10 schräg zur radialen Richtung verlaufen. Die Seitenflächen 13 führen in den Aussparungen 10 von der Innenseite der Begrenzungswand zu ihrer Außenseite und können beispielsweise einen Trichter bilden.

Zur Montage wird das Reifenventil in eine passende Ventilbohrung der Felge 12 gesteckt. Durch Anziehen einer Mutter 16 kann dann der Ventilkörper 5 gegen die Felge gezogen werden, so dass sich die radial äußere Begrenzungswand 9 an der Felge 12 abstützt und der Dichtring 8 zwischen der Felge 12 und dem Ventilkörper 5 verpresst wird.

An dem Reifenventil kann eine Reifendrucküberwachungseinheit 14, die einen Drucksensor und einen Sender enthält, befestigt sein, beispielsweise mittels einer Hohlschraube 15.

### Bezugszeichenliste

- 1: Ventilschaft
- 2: Luftkanal
- 3: Lufteinlass
- 4: Luftauslass
- 5: Ventilkörper
- 6: Ringnut
- 8: Dichtring
- 9: Begrenzungswand
- 10: Aussparung
- 12: Felge
- 13: Seitenfläche
- 14: Reifendrucküberwachungseinheit
- 15: Hohlschraube
- 16: Mutter

## Patentansprüche

1. Reifenventil zur Montage an einer Felge (12), mit
einem Luftkanal (2), der von einem Lufteinlass (3) zu einem Luftauslass (4) führt, und
einer in Richtung des Lufteinlasses (3) offenen Ringnut (6) zur Aufnahme eines Dichtrings (8),
**dadurch gekennzeichnet, dass**
eine radial äußere Begrenzungswand (9) der Ringnut (6) wenigstens eine Aussparung (10) aufweist.

2. Reifenventil nach Anspruch 1, **dadurch gekennzeichnet, dass** sich die Aussparung (10) in radialer Richtung nach Außen verengt.

3. Reifenventil nach einem der vorstehenden Ansprüche, **dadurch gekennzeichnet, dass** die Aussparung (10) in axialer Richtung zu dem Lufteinlass (3) hin offen ist.

4. Reifenventil nach einem der vorstehenden Ansprüche, **dadurch gekennzeichnet, dass** sich die Aussparung (10) in axialer Richtung über wenigstens drei Viertel der Höhe der radial äußeren Begrenzungswand (9) erstreckt.

5. Reifenventil nach einem der vorstehenden Ansprüche, **dadurch gekennzeichnet, dass** die radial äußere Begrenzungswand (9) eine Anlagefläche zur Anlage an eine Felge (12) bildet.

6. Reifenventil nach einem der vorstehenden Ansprüche, **dadurch gekennzeichnet, dass** die Aussparungen (10) radial durch die Begrenzungswand (9) hindurchgehen.

7. Reifenventil nach einem der vorstehenden Ansprüche, **dadurch gekennzeichnet, dass** die radial äußere Begrenzungswand (9) wenigstens vier, vorzugsweise wenigstens sechs Aussparungen (10) aufweist.

8. Reifenventil nach einem der vorstehenden Ansprüche, **dadurch gekennzeichnet, dass** die in Umfangsrichtung an der Innenseite der Begrenzungswand (9) gemessenen Gesamtlänge der Aussparung (10) oder der Aussparungen (10) wenigsten ein Fünftel, vorzugsweise wenigstens über ein Viertel des Umfangs der Begrenzungswand (9) ausmacht.

9. Reifenventil nach einem der vorstehenden Ansprüche, **dadurch gekennzeichnet, dass** die in Umfangsrichtung an der Innenseite der Begrenzungswand (9) gemessenen Gesamtlänge der Aussparung (10) oder der Aussparungen (10) höchstens die Hälfte, vorzugsweise nicht mehr als ein Drittel des Umfangs der Begrenzungswand (9) ausmacht.

10. Reifenventil nach einem der vorstehenden Ansprüche, **dadurch gekennzeichnet, dass** in der Ringnut (6) ein Dichtring (8) angeordnet ist.

## Claims

1. A tire valve for installation on a rim (12), comprising:
an air duct (2) leading from an air inlet (3) to an air outlet (4); and
an annular groove (6), which is open in the direction of the air inlet (3), for receiving a sealing ring (8),
**characterized in that**
a radially outer delimiting wall (9) of the annular groove (6) includes at least one recess (10).

2. The tire valve according to claim 1, **characterized in that** the recess (10) narrows in the radial direction toward the outside.

3. A tire valve according to any one of the preceding claims, **characterized in that** recess (10) is open in the axial direction toward the air inlet (3).

4. A tire valve according to any one of the preceding claims, **characterized in that** the recess (10), in the axial direction, extends across at least three quarter the height of the radially outer delimiting wall (9).

5. A tire valve according to any one of the preceding claims, **characterized in that** the radially outer delimiting wall (9) forms a bearing surface for bearing against a rim (12).

6. A tire valve according to any one of the preceding claims, **characterized in that** the recesses (10) extend radially through the delimiting wall (9).

7. A tire valve according to any one of the preceding claims, **characterized in that** the radially outer delimiting wall (9) includes at least four, and preferably at least six, recesses (10).

8. A tire valve according to any one of the preceding claims, **characterized in that** the total length of the recess (10) or of the recesses, measured in the circumferential direction on the inside of the delimiting wall (9), accounts for at least one fifth, and preferably at least one quarter, of the circumference of the delimiting wall (9).

9. A tire valve according to any one of the preceding claims, **characterized in that** the total length of the recess (10) or of the recesses, measured in the circumferential direction on the inside of the delimiting wall (9), accounts for no more than half, and preferably no more than one third, of the circumference of the delimiting wall (9).

10. A tire valve according to any one of the preceding claims, **characterized in that** a sealing ring (8) is arranged in the annular groove (6).

## Revendications

1. Valve de pneumatique pour un montage sur une jante (12), avec
un canal d'air (2) qui mène à partir d'une entrée d'air (3) vers une sortie d'air (4), et
une rainure annulaire (6) ouverte en direction de l'entrée d'air (3) pour la réception d'une bague d'étanchéité (8),
**caractérisée en ce**
**qu'**une cloison de délimitation (9) radiale extérieure de la bague d'étanchéité (6) présente au moins un renfoncement (10).

2. Valve de pneumatique selon la revendication 1, **caractérisée en ce que** le renfoncement (10) se rétrécit dans la direction radiale vers l'extérieur.

3. Valve de pneumatique selon l'une des revendications précédentes, **caractérisée en ce que** le renfoncement (10) est ouvert dans la direction axiale vers l'entrée d'air (3).

4. Valve de pneumatique selon l'une des revendications précédentes, **caractérisée en ce que** le renfoncement (10) dans la direction axiale s'étend sur au moins les trois quarts de la hauteur de la cloison de délimitation (9) extérieure radiale.

5. Valve de pneumatique selon l'une des revendications précédentes, **caractérisée en ce que** la cloison de délimitation (9) extérieure radiale forme une surface d'appui pour l'appui sur une jante (12).

6. Valve de pneumatique selon l'une des revendications précédentes, **caractérisée en ce que** les renfoncements (10) traversent radialement la cloison de délimitation (9).

7. Valve de pneumatique selon l'une des revendications précédentes, **caractérisée en ce que** la cloison de délimitation (9) extérieure radiale présente au moins quatre, de préférence, au moins six renfoncements (10).

8. Valve de pneumatique selon l'une des revendications précédentes, **caractérisée en ce que** la longueur totale du renfoncement (10) ou des renfoncements (10) mesurée dans la direction circonférentielle sur le côté intérieur de la cloison de délimitation (9) correspond à au moins un cinquième, de préférence, au moins à plus d'un quart du périmètre de la cloison de délimitation (9).

9. Valve de pneumatique selon l'une des revendications précédentes, **caractérisée en ce que** la longueur totale du renfoncement (10) ou des renfoncements (10) mesurée dans la direction circonférentielle sur le côté intérieur de la cloison de délimitation (9) correspond au plus à la moitié, de préférence, à pas plus d'un tiers du périmètre de la cloison de délimitation (9).

10. Valve de pneumatique selon l'une des revendications précédentes, **caractérisée en ce qu'**une bague d'étanchéité (8) est disposée dans la rainure annulaire (6).
